# EUROPÄISCHE PATENTANMELDUNG

(11) **EP 2 784 362 A1**
(43) Veröffentlichungstag der Anmeldung: **01.10.2014**
(21) Anmeldenummer: 14157979.7
(22) Anmeldetag: 06.03.2014
(51) Int. Cl.: F16K 31/06, F16B 1/00, F16K 27/04, F16B 39/284, F16B 39/30

(54) **Betätigungsvorrichtung mit verdrehgesicherter Haltemutter**

(30) Priorität: 27.03.2013 DE 102013205395
(71) Anmelder: ROBERT BOSCH GMBH, 70442 Stuttgart (DE)
(72) Erfinder: Gruen, Juergen, 97816 Lohr (DE); Zaiser, Liebhart, 97753 Karlstadt (DE); Doerner, Christian, 97816 Lohr (DE); Selke, Andre, 06618 Naumburg (DE); Lang, Matthias, 97849 Roden (DE)
(74) Vertreter: Maiß, Harald

(57) **Zusammenfassung**

Die Erfindung betrifft eine Betätigungsvorrichtung für den Steuerkörper eines Ventils, wobei die Betätigungsvorrichtung ein Polrohr (40) umfasst, in welchem ein Magnetanker und ein Ankerstößel bezüglich einer Längsrichtung (31) beweglich aufgenommen sind, wobei der Ankerstößel am vom Magnetanker abgewandten Ende mit dem Steuerkörper koppelbar ist, wobei das Polrohr von einer elektrischen Spule umgeben ist, welche mit einem Kunststoffmantel umhüllt ist, wobei an dem vom Ankerstößel angewandten Längsende des Polrohrs (40) ein Außengewinde (41) an diesem vorgesehen ist, wobei eine Haltemutter (50) mit einem Innengewinde (51) vorgesehen ist, welche auf das Außengewinde (41) des Polrohrs (40) aufgeschraubt ist, wobei die Haltemutter (50) wenigstens mittelbar an dem Kunststoffmantel der Spule anliegt.

Erfindungsgemäß weist das Querschnittsprofil des Außengewindes (41) eine erste und eine zweite Außenflanke (42; 43) auf, welche in einer nach außen weisenden Gewindespitze (44) spitz zueinander zulaufen, wobei das Querschnittsprofil des Innengewindes (51) eine erste und eine zweite Innenflanke (52; 53) aufweist, welche komplementär zur ersten und zweiten Außenflanke (42; 43) ausgebildet sind, wobei die erste und die zweite Innenflanke (52; 53) über einen Gewindefuß (54) miteinander verbunden sind, wobei der Gewindefuß (54) in einem Klemmbereich (55) spaltfrei an die Gewindespitze (44) angepasst ist, wobei der Gewindefuß (54) abseits des Klemmbereichs (55) mit Abstand zu der ersten und der zweiten Außenflanke (42; 43) ausgebildet ist.

## Beschreibung

Die Erfindung betrifft eine Betätigungsvorrichtung gemäß dem Oberbegriff von Anspruch 1.

Aus der DE 199 52 800 A1 ist eine Betätigungsvorrichtung für den Steuerkörper eines hydraulischen Ventils bekannt. Die Betätigungsvorrichtung umfasst ein Polrohr, in welchem ein Magnetanker und ein Ankerstößel bezüglich einer Längsrichtung beweglich aufgenommen sind. Der Ankerstößel ragt am vom Magnetanker abgewandten Ende aus dem Polrohr heraus, so dass seine dortige Stirnfläche zur Anlage mit einer Stirnfläche des Steuerkörpers in Form eines Steuerschiebers gebracht werden kann, so dass der Magnetanker über den Ankerstößel mit dem Steuerkörper bewegungsgekoppelt ist. Um das Polrohr herum ist eine elektrische Spule vorgesehen, welche von einem Kunststoffmantel umhüllt ist. Um den Kunststoffmantel herzustellen, wird die Spule in eine Gussform eingelegt, wobei anschließend zähflüssiges Kunststoffmaterial in die Gussform eingefüllt wird, welches dort aushärtet. Das Kunststoffmaterial umhüllt die Spule so, dass diese flüssigkeitsdicht eingeschlossen ist. An dem vom Ankerstößel abgewandten Ende des Polrohrs ist ein Außengewinde am Polrohr vorgesehen, auf welches das Innengewinde einer Haltemutter aufgeschraubt ist. Über die Haltemutter wird der Kunststoffmantel des Polrohrs gegen das Gehäuse des Ventils verspannt.

Der Nachteil der bekannten Betätigungsvorrichtung besteht darin, dass der Kunststoffmantel aufgrund des in der Spule mit wechselnder Stärke fließenden elektrischen Stroms erheblichen Temperaturschwankungen ausgesetzt ist. Dabei ändert sich die Länge des Kunststoffmantels zum Teil so stark, dass die Vorspannung zwischen der Haltemutter und dem Kunststoffmantel vollständig aufgehoben wird. In der Folge löst sich die Haltemutter vom Polrohr. Weiter kann die genannte Vorspannung der Alterung aufgehoben werden.

Die Aufgabe der Erfindung besteht darin, ein Lösen der Haltemutter zu unterbinden. Weiter soll die Betätigungsvorrichtung besonders kostengünstig sein.

Gemäß dem selbständigen Anspruch wird diese Aufgabe dadurch gelöst, dass das Querschnittsprofil des Außengewindes eine erste und eine zweite Außenflanke aufweist, welche in einer nach außen weisenden Gewindespitze spitz zueinander zulaufen, wobei das Querschnittsprofil des Innengewindes eine erste und eine zweite Innenflanke aufweist, welche komplementär zur ersten und zweiten Außenflanke ausgebildet sind, wobei die erste und die zweite Innenflanke über einen Gewindefuß miteinander verbunden sind, wobei der Gewindefuß in einem Klemmbereich spaltfrei an die Gewindespitze angepasst ist, wobei der Gewindefuß abseits des Klemmbereichs mit Abstand zu der ersten und der zweiten Außenflanke ausgebildet ist. Dabei ist insbesondere daran gedacht, den Gewindefuß im Neuzustand so herzustellen, dass er beim Aufschrauben der Haltemutter auf das Polrohr mit der dortigen Gewindespitze überschneidet. In der Folge verformt sich der Gewindefuß sowohl plastisch als auch elastisch. Durch diese Verformung berühren sich die Gewindespitze und der Gewindefuß im Klemmbereich unter Vorspannung und mithin spaltfrei. Diese Vorspannung wird selbst dann nicht aufgehoben, wenn die Vorspannung zwischen Kunststoffmantel und Haltemutter aufgrund der Temperaturwechsel aufgehoben ist. Die Haltemutter kann sich daher nicht vom Polrohr lösen. Anzumerken ist, dass sich zwischen der Haltemutter und dem Kunststoffmantel weitere Teile befinden können, beispielsweise ein O-Ring.

In den abhängigen Ansprüchen sind vorteilhafte Weiterbildungen und Verbesserungen der Erfindung angegeben.

Der Gewindefuß kann im Querschnitt betrachtet wenigstens abschnittsweise parallel zur Längsrichtung verlaufen. Vorzugsweise ist daran gedacht, dass der Gewindefuß im Neuzustand vollständig parallel zur Längsrichtung ausgebildet ist, so dass er eine Zylinderfläche definiert. Erst beim Aufschrauben der Haltemutter auf das Polrohr wird der Klemmbereich ausgeformt.

Das Außengewinde des Polrohrs kann aus Metall bestehen, wobei wenigstens das Innengewinde der Haltemutter, vorzugsweise die gesamte Haltemutter aus Kunststoff besteht. Hierdurch wird sichergestellt, dass sich ausschließlich der Gewindefuß an der Haltemutter verformt. Die Gewindespitze am Polrohr verformt sich allenfalls elastisch. Dadurch werden Beschädigungen am teuren Polrohr vermieden. Die kostengünstige Haltemutter kann problemlos ersetzt werden, wenn die erfindungsgemäße Sicherung durch vielfaches Lösen und Festdrehen der Haltemutter ihre Wirkung verliert.

Der Spitzenwinkel zwischen der ersten und der zweiten Außenflanke kann zwischen 50° und 70° betragen. Vorzugsweise beträgt der Spitzenwinkel 60°. Das entsprechende Gewinde weist eine hohe Tragfähigkeit und eine hohe Sicherheit gegen Lösen auf.

Die erste und die zweite Innenflanke und die erste und die zweite Außenflanke können im Querschnitt betrachtet gerade ausgebildet sein. Damit sind sie besonders einfach herstellbar. Die oben geforderte komplementäre Ausbildung von Außen- und Innenflanken bedeutet, dass die bevorzugten geraden Flanken parallel zueinander ausgebildet sind.

Die erste und die zweite Außenflanke und die erste die zweite Innenflanke können Spiel zueinander aufweisen. Hierdurch wird sichergestellt, dass sich der Drehwiderstand beim Aufschrauben der Haltemutter auf das Polrohr nahezu ausschließlich durch die Berührung zwischen Gewindespitze und Gewindefuß ergibt. Erst wenn die Haltemutter zumindest mittelbar unter Vorspannung am Kunststoffmantel anliegt, steigt der Drehwiderstand auf einen höheren Wert an.

Die Erfindung wird im Folgenden anhand der beigefügten Zeichnungen näher erläutert. Es stellt dar:
- Fig. 1: einen grobschematischen Querschnitt eines Ventils mit einer erfindungsgemäßen Betätigungsvorrichtung;
- Fig. 2: eine perspektivische Ansicht eines erfindungsgemäßen Polrohrs mit einer Haltemutter; und
- Fig. 3: einen Teilquerschnitt der Anordnung nach Fig. 2 im Bereich des Außengewindes am Polrohr.

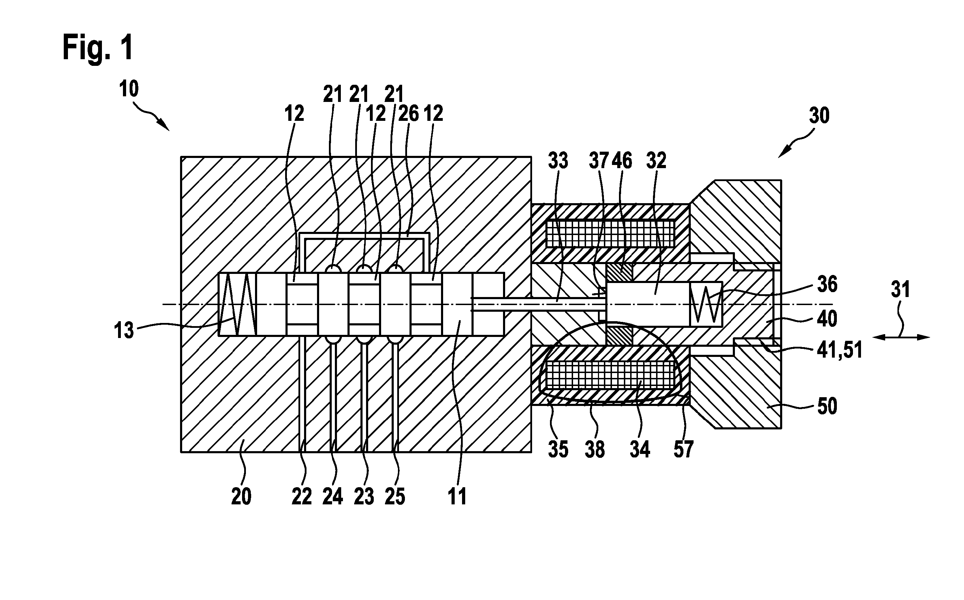

Fig. 1 zeigt einen grobschematischen Querschnitt eines Ventils 10 mit einer erfindungsgemäßen Betätigungsvorrichtung 30. Das hydraulische Ventil 10 ist beispielhaft als Schieberventil dargestellt, wobei der Steuerkörper 11 der Steuerschieber ist. Die Erfindung kann aber auch bei einem Sitzventil zum Einsatz kommen. Das Ventil 10 umfasst ein Gehäuse 20, welches beispielsweise aus Grauguss besteht. In dem Gehäuse 20 ist ein Steuerkörper 11 bezüglich einer Längsrichtung 31 linearbeweglich aufgenommen, der vorzugsweise aus Stahl besteht. Der Steuerkörper 11 ist, vorzugsweise mit hoher Genauigkeit kreiszylindrisch ausgeführt, wobei er beispielsweise mit drei kreisringförmig umlaufenden Schiebernuten 12 versehen ist. In dem Gehäuse 20 ist eine, vorzugsweise mit sehr geringem Spiel an den Steuerkörper 11 angepasste kreiszylindrische Bohrung vorgesehen, welche mit beispielsweise drei kreisringförmig umlaufenden Gehäusenuten 21 versehen ist. Die Schieber- und die Gehäusenuten 12; 21 begrenzen jeweils zugeordnete Steuerblenden, deren freie Querschnittsfläche sich bei Bewegung des Steuerkörpers 11 in Längsrichtung 31 stetig ändert. Weiter sind in dem Gehäuse 20 ein Tankkanal 22; ein Pumpenkanal 23 und ein erster und ein zweiter Arbeitskanal 24; 25 vorgesehen, welche über die genannten Steuerblenden verbunden sind, so dass der Fluidstrom zwischen den genannten Kanälen 22 - 25 gesteuert werden kann. Die genaue Verschaltung der genannten Kanäle 22 - 25 kann durch eine geeignete Anordnung der Schieber- und der Gehäusenuten 12; 21 in weiten Grenzen verändert werden. Hinzuweisen ist noch auf den Verbindungskanal 26, der den Tankkanal 24 mit einer weiteren Schiebernut 12 verbindet.

Die Betätigungsvorrichtung 30 umfasst ein Polrohr 40, welches vorliegend gesondert vom Gehäuse 20 ausgebildet und fest mit diesem verbunden und beispielsweise verschraubt ist. Es kann aber auch daran gedacht sein, das Polrohr 40 einstückig mit dem Gehäuse 20 auszubilden, wobei das Ventil 10 dabei vorzugsweise in Form eines kompakten Cartridge-Ventils ausgeführt ist. Das Polrohr 40 besteht zum größten Teil aus ferromagnetischem Material, beispielsweise aus Stahl. Es wird dabei durch einen nichtmagnetischen Flussunterbrechungsabschnitt 46, der beispielsweise aus Kupfer besteht in zwei ferromagnetische Bereiche geteilt. Das entsprechende Polrohr 40 wird beispielsweise hergestellt, indem zwei gesonderte Stahlteile mittels Kupferzusatzwerkstoff verschweißt werden. Anstelle der gezeigten vollständigen Flussunterbrechung ist es auch möglich, das Polrohr 40 im Flussunterbrechungsabschnitt 46 sehr dünn auszuführen. Das entsprechende Polrohr 40 ist dann kostengünstiger, wobei die Magnetkraft etwas niedriger ist. Darüber hinaus sind weitere Verfahren zur Herstellung des Flussunterbrechungsabschnitts 46 bekannt, wie das Einschweißen einer unmagnetischen Zone, beispielsweise mittels Widerstandsschweißen, Laserschweißen oder Elektronenstrahlschweißen. Weiter kann der Flussunterbrechungsabschnitt 46 durch örtliche Wärmebehandlung hergestellt werden.

Außen ist das Polrohr 40 im Wesentlichen kreiszylindrisch ausgebildet, wobei es von einer elektrischen Spule 34 umgeben ist. Demensprechend verlaufen die Kupferdrahtwindungen der Spule 34 schraubenförmig um das Polrohr 40 herum. Die genannten Kupferdrahtwindungen der Spule 34 sind mit einem Kunststoffmantel 35 umgeben, der beispielsweise hergestellt wird, indem die Spule 34 in eine Gussform eingelegt wird, welche anschließend mit zähflüssigem Kunststoffmaterial aufgefüllt wird, welches in der Gussform aushärtet. Bei dem Kunststoffmaterial kann es sich um ein Duroplast oder ein Thermoplast handeln. Durch den Kunststoffmantel 35 wird die Spule 34 flüssigkeitsdicht umschlossen. Der Kunststoffmantel 35 kann zusätzlich von einem (nicht dargestellten) ferromagnetischen Gehäuse umgeben sein, welches am Polrohr 40 derart anliegt, dass die Spule 34 außer am Flussunterbrechungsabschnitt 46 vollständig von ferromagnetischem Material umgeben ist. Dies erhöht die Magnetkraft der Betätigungsvorrichtung 30 beträchtlich.

Der kreiszylindrische Magnetanker 32 aus ferromagnetischem Material ist in einer mit geringem Spiel angepassten Bohrung des Polrohrs 40 bezüglich der Längsrichtung 31 beweglich aufgenommen. Der Magnetanker 32 wird von einer zweiten Feder 36 in Richtung des Steuerkörpers 11 gedrückt, wobei gleichzeitig der Steuerkörper 11 von einer deutlich stärkeren ersten Feder 13 gegen den gesonderten Ankerstößel 33 gedrückt wird, der zwischen dem Magnetanker 32 und dem Steuerkörper 11 angeordnet ist. Hierbei ist anzumerken, dass der Ankerstößel 33 auch einstückig mit dem Steuerkörper 11 und/oder dem Magnetanker 32 ausgebildet sein kann. Der Ankerstößel 33 ist vorzugsweise im Wesentlichen kreiszylindrisch ausgebildet, wobei sein Durchmesser kleiner als der des Steuerkörpers 11 und der des Magnetankers 32 ist.

Die in Fig. 1 dargestellte Stellung des Magnetankers 32 stellt sich nur ein, wenn die Spule 34 von elektrischem Strom durchflossen wird. Das hierdurch erzeugte Magnetfeld bewirkt eine Magnetkraft auf den Magnetanker 32, welche diesen in eine Stellung bewegt, in der die geschlossenen Magnetfeldlinien 38 möglichst vollständig innerhalb des ferromagnetischen Materials verlaufen, welches die Spule 34 umgibt. Hierfür müssen sie über den Magnetanker 32 laufen, da der Flussunterbrechungsabschnitt 46 nichtmagnetisch ist. Wird die Spule 34 nicht von elektrischem Strom durchflossen, so bewegt sich der Magnetanker 32 aufgrund der Vorspannkräfte der ersten und der zweiten Feder 13; 36 in die in Fig. 1 rechte Endstellung, wodurch sich ein nicht magnetischer Luftspalt zwischen der Stirnfläche 37 des Magnetankers 32 und dem Polrohr 40 ergibt.

An dem von dem Ankerstößel 33 abgewandten Ende des Polrohrs 40 ist ein Außengewinde 41 vorgesehen, auf das eine gesonderte Haltemutter 50 aufgeschraubt ist, welche vollständig aus Kunststoff, beispielsweise Polyamid besteht. Die Haltemutter 50 drückt mit ihrer Stirnfläche 57 gegen den Kunststoffmantel 35 der Spule 34. Dabei kann zwischen dem Kunststoffmantel 35 und der Haltemutter 50 noch das bereits angesprochene ferromagnetische Gehäuse der Spule 34 angeordnet sein. Weiter kann dort ein O-Ring oder ein anderes Dichtelement vorgesehen sein. Der elektrische Strom in der Spule 34 erwärmt den Kunststoffmantel 35 erheblich, wobei sich dieser wieder abkühlt, wenn der genannte Strom abgeschaltet ist. Die dadurch verursachten Längenänderungen des Kunststoffmantels 35 verursachen eine erhebliche Schwankung der Vorspannkraft der Haltemutter 50. Anzumerken ist, dass durch die genannten Wärmeeinwirkung auch die Haltemutter 50 verformt wird. Darüber hinaus wird die Haltemutter 50 aus Kunststoff auch bei Umgebungstemperatur durch Kriechvorgänge verformt, so dass die Vorspannkraft der Schraubverbindung mit der Zeit abnimmt.

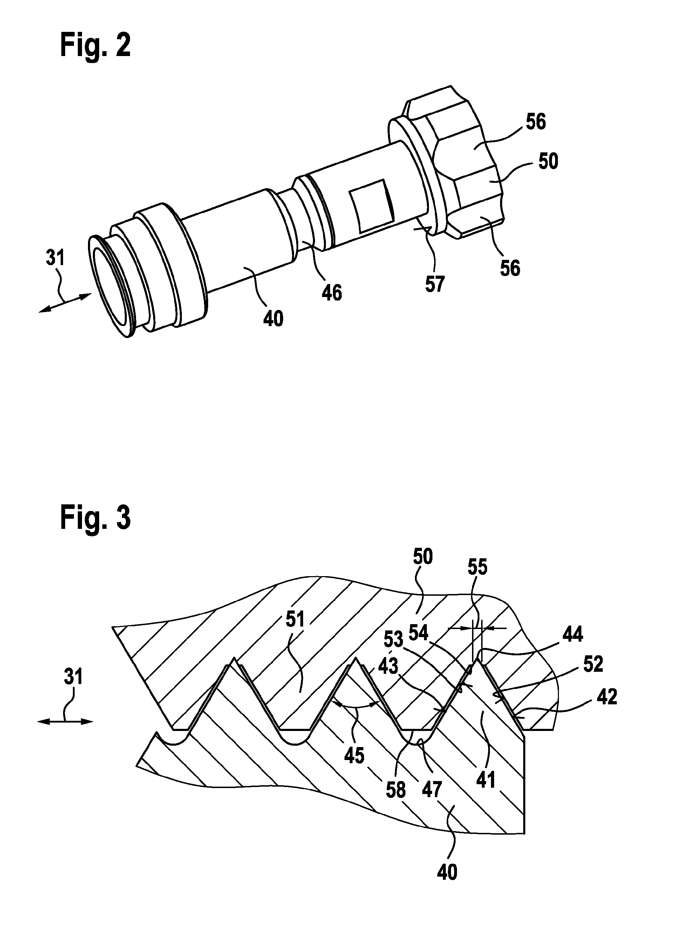

Fig. 2 zeigt eine perspektivische Ansicht eines erfindungsgemäßen Polrohrs 40 mit einer Haltemutter 50. Bei diesem Polrohr 40 ist der Flussunterbrechungsabschnitt 46 wie bereits angesprochen in der Weise ausgebildet, dass das Polrohr aus einem einheitlichen ferromagnetischen Material besteht, das dort eine sehr geringe Wandstärke von beispielsweise 0,5 mm aufweist, die geringer ist als die Wanddicke des verbleibenden Polrohrs 40. Die Seitenflächen der entsprechenden kreisringförmig umlaufenden Nut sind beispielsweise kegelförmig ausgebildet, wodurch sich eine Magnetkraft ergibt, welche in etwa proportional zur Stromstärke in der Spule ist. Zu erkennen sind außerdem die parallel zur Längsrichtung 31 verlaufenden Greifnuten 56 an der Haltemutter 50, welche gleichmäßig verteilt an deren Umfang angeordnet sind. Durch die Greifnuten 56 kann die Haltemutter 50 einfacher von Hand und auch ohne Werkzeug festgedreht und gelöst werden. Die Haltemutter 50 kann außen aber auch ein Vier- oder ein Sechskant aufweisen.

Fig. 3 zeigt einen Teilquerschnitt der Anordnung nach Fig. 2 im Bereich des Außengewindes 41 am Polrohr 40, wobei die Schnittebene durch die Mittelachse des Außengewindes 41 verläuft. Das Außengewinde 41 des Polrohrs 40 besitzt eine erste und eine zweite Außenflanke 42; 43, die im Querschnitt betrachtet gerade ausgebildet sind, wobei sie spiegelsymmetrisch zu einer Ebene angeordnet sind, welche senkrecht zur Längsrichtung 31 angeordnet ist. Die erste und die zweite Außenflanke 42; 43 laufen in einer Gewindespitze 44 spitz zueinander zu, wobei sie einen Spitzenwinkel 45 von beispielsweise 60 ° einschließen. Der Gewindefuß 47 des Außengewindes ist im Querschnitt betrachtet kreisbogenförmig verrundet ausbildet. Das in Fig. 3 dargestellte Gewindeprofil von Außen- und Innengewinde 41; 51 ist über deren gesamte Länge konstant.

Das Innengewinde 51 der Haltemutter 50 weist eine erste und eine zweite Innenflanke 52; 53 auf, die im Querschnitt betrachtet gerade und parallel zur zugeordneten ersten bzw. zweiten Außenflanke 42; 43 angeordnet sind. Dabei ist ein geringes Spiel zwischen den Innen- und den Außenflanken 52; 53; 42; 43 vorgesehen. Die Fig. 3 zeigt dabei in etwa die Spielverhältnisse, welche sich ergeben, wenn die Haltemutter 50 auf das Polrohr 40 aufgeschraubt ist, wobei sie noch nicht mit dem Kunststoffmantel verspannt ist. Sobald die Haltemutter 50 mit dem Kunststoffmantel verspannt ist, liegen die zweite Außenflanke 43 und die zweite Innenflanke 53, welche dem Kunststoffmantel zugewandt sind, aneinander an, wobei sich das Spiel auf der gegenüberliegenden Seite entsprechend vergrößert.

Die erste und die zweite Innenflanke 52; 53 sind über einen Gewindefuß 54 miteinander verbunden, der im Querschnitt betrachtet gerade und parallel zur Längsrichtung verläuft, wobei er in einem Klemmbereich 55 spaltfrei an der Gewindespitze 44 des Außengewindes anliegt. Der Durchmesser, welcher vom Gewindefuß abseits des Klemmbereichs 55 definiert wird, ist dementsprechend kleiner als der Durchmesser, welcher von der Gewindespitze 44 des Außengewindes 41 definiert wird. Abseits des Klemmbereichs 55 ist ein Abstand zwischen dem Gewindefuß 54 des Innengewindes 51 und der ersten und der zweiten Außenflanke 42; 43 vorhanden.

Die erste und die zweite Innenflanke 52; 53 sind über einen Gewindekopf 58 miteinander verbunden, welcher im Querschnitt betrachtet gerade und parallel zur Längsrichtung 31 ausgebildet ist. Der Gewindekopf 58 des Innengewindes 51 berührt den Gewindefuß 47 des Außengewindes 40 nicht.

### Bezugszeichenliste

- 10: Ventil
- 11: Steuerkörper
- 12: Schiebernut
- 13: erste Feder

- 20: Gehäuse
- 21: Gehäusenut
- 22: Tankkanal
- 23: Pumpenkanal
- 24: erster Arbeitskanal
- 25: zweiter Arbeitskanal
- 26: Verbindungskanal

- 30: Betätigungsvorrichtung
- 31: Längsrichtung
- 32: Magnetanker
- 33: Ankerstößel
- 34: Spule
- 35: Kunststoffmantel
- 36: zweite Feder
- 37: Stirnfläche des Magnetankers
- 38: Magnetfeldlinie

- 40: Polrohr
- 41: Außengewinde
- 42: erste Außenflanke
- 43: zweite Außenflanke
- 44: Gewindespitze

- 45: Spitzenwinkel
- 46: Flussunterbrechungsabschnitt
- 47: Gewindefuß des Außengewindes

- 50: Haltemutter
- 51: Innengewinde
- 52: erste Innenflanke
- 53: zweite Innenflanke
- 54: Gewindefuß des Innengewindes
- 55: Klemmbereich
- 56: Greifnut
- 57: Stirnfläche
- 58: Gewindekopf des Innengewindes

## Patentansprüche

1. Betätigungsvorrichtung (30) für den Steuerkörper (11) eines Ventils (10), wobei die Betätigungsvorrichtung (30) ein Polrohr (40) umfasst, in welchem ein Magnetanker (32) und ein Ankerstößel (33) bezüglich einer Längsrichtung (31) beweglich aufgenommen sind, wobei der Ankerstößel (33) am vom Magnetanker (32) abgewandten Ende mit dem Steuerkörper (11) koppelbar ist, wobei das Polrohr (40) von einer elektrischen Spule (34) umgeben ist, welche mit einem Kunststoffmantel (35) umhüllt ist, wobei an dem vom Ankerstößel (33) angewandten Längsende des Polrohrs (40) ein Außengewinde (41) an diesem vorgesehen ist, wobei eine Haltemutter (50) mit einem Innengewinde (51) vorgesehen ist, welche auf das Außengewinde (41) des Polrohrs (40) aufgeschraubt ist, wobei die Haltemutter (50) wenigstens mittelbar an dem Kunststoffmantel (35) der Spule (34) anliegt,
**dadurch gekennzeichnet, dass** das Querschnittsprofil des Außengewindes (41) eine erste und eine zweite Außenflanke (42; 43) aufweist, welche in einer nach außen weisenden Gewindespitze (44) spitz zueinander zulaufen, wobei das Querschnittsprofil des Innengewindes (51) eine erste und eine zweite Innenflanke (52; 53) aufweist, welche komplementär zur ersten und zweiten Außenflanke (42; 43) ausgebildet sind, wobei die erste und die zweite Innenflanke (52; 53) über einen Gewindefuß (54) miteinander verbunden sind, wobei der Gewindefuß (54) in einem Klemmbereich (55) spaltfrei an die Gewindespitze (44) angepasst ist, wobei der Gewindefuß (54) abseits des Klemmbereichs (55) mit Abstand zu der ersten und der zweiten Außenflanke (42; 43) ausgebildet ist.

2. Betätigungsvorrichtung nach Anspruch 1,
**dadurch gekennzeichnet, dass** der Gewindefuß (54) im Querschnitt betrachtet wenigstens abschnittsweise parallel zur Längsrichtung (31) verläuft.

3. Betätigungsvorrichtung nach einem der vorstehenden Ansprüche,
**dadurch gekennzeichnet, dass** das Außengewinde (41) des Polrohrs (40) aus Metall besteht, wobei wenigstens das Innengewinde (51) der Haltemutter (50), vorzugsweise die gesamte Haltemutter (50) aus Kunststoff besteht.

4. Betätigungsvorrichtung nach einem der vorstehenden Ansprüche,
**dadurch gekennzeichnet, dass** der Spitzenwinkel (45) zwischen der ersten und der zweiten Außenflanke (41; 42) zwischen 50° und 70° beträgt.

5. Betätigungsvorrichtung nach einem der vorstehenden Ansprüche,
**dadurch gekennzeichnet, dass** die erste und die zweite Innenflanke (52; 53) und die erste und die zweite Außenflanke (42; 43) im Querschnitt betrachtet gerade ausgebildet sind.

6. Betätigungsvorrichtung nach einem der vorstehenden Ansprüche,
**dadurch gekennzeichnet, dass** die erste und die zweite Außenflanke (42; 43) und die erste und die zweite Innenflanke (52; 53) Spiel zueinander aufweisen.
